# EUROPÄISCHE PATENTANMELDUNG

(11) **EP 4 588 611 A1**
(43) Veröffentlichungstag der Anmeldung: **23.07.2025**
(21) Anmeldenummer: 24153014.6
(22) Anmeldetag: 20.01.2024
(51) Int. Cl.: B23Q 1/66, B23Q 11/08, B23Q 39/02

(54) **WERKZEUGMASCHINE**

(71) Anmelder: Schwäbische Werkzeugmaschinen GmbH, 78713 Schramberg-Waldmössingen (DE)
(72) Erfinder: Mixner, Marcus, 78739 Hardt (DE)
(74) Vertreter: Schorr, Peter Karl

(57) **Zusammenfassung**

Die Erfindung betrifft eine Werkzeugmaschine (2) mit einem Maschinengestell, mit mindestens einer Arbeitsspindel (4), die um eine Spindelachse (6) drehbar gelagert ist, mit mindestens einem der mindestens einen Arbeitsspindel (4) zugeordneten Werkstücktisch (8), der im Maschinengestell um eine Rotationsachse (10) dreh- oder schwenkbar gelagert ist, der eine geschlossene, flächenhafte Trennwand (12) umfasst, die sich über die gesamte Breite des Werkstücktischs (8) quer zur Rotationsachse (10) und über die gesamte Länge des Werkstücktischs (8) parallel zur Rotationsachse (10) erstreckt und durch die die Rotationsachse (10) verläuft, und der mindestens eine erste Werkstückaufnahme (14) und mindestens eine zweite Werkstückaufnahme (16) umfasst, die bezüglich der Trennwand (12) auf einander gegenüberliegenden Seiten der Trennwand (12) drehfest am Werkstücktisch (8) angeordnet sind, wobei der Werkstücktisch (8) zumindest in einem hauptzeitparallelen Be- und Entlademodus der Werkzeugmaschine (2) in eine Trennstellung überführbar ist, in der die Trennwand (12) quer zur zugeordneten Spindelachse (6) verlaufend angeordnet ist und einen Arbeitsbereich (18), in dem in der Trennstellung die erste oder die zweite Werkstückaufnahme (14, 16) angeordnet und der zugeordneten Arbeitsspindel (4) zugänglich ist, von einem Beladebereich (20) räumlich trennt, in dem in der Trennstellung die zweite, bzw. die erste Werkstückaufnahme (16, 14) angeordnet ist.

## Beschreibung

Die Erfindung betrifft eine Werkzeugmaschine.

Werkzeugmaschinen sind in unterschiedlichen Ausführungsformen und Ausgestaltungen aus dem Stand der Technik bekannt. Diese können beispielsweise Maschinengestelle umfassen, an denen ein Werkstücktisch angeordnet ist, an dem Werkstücke lösbar befestigt werden können. Die Werkstücke können durch eine Arbeitsspindel der Werkzeugmaschine bearbeitet werden.

Bei bekannten Werkzeugmaschinen wird der Werkstücktisch mit Werkstücken beladen, während die Arbeitsspindel außer Betrieb ist. Darüber hinaus ruht die Arbeitsspindel, wenn die Werkstücke nach der Bearbeitung vom Werkstücktisch entfernt werden. Hierdurch können hohe Stillstandzeiten der Werkzeugmaschine auftreten.

Darüber hinaus sind Werkzeugmaschinen bekannt, bei denen am Maschinengestell ein so genannter Schwenkträger schwenkbar angeordnet ist, an dem zwei drehbare Werkstücktische angeordnet sind, die bezüglich der Rotationsachse des Schwenkträgers auf einander gegenüberliegenden Seiten am Schwenkträger angeordnet sind. Durch Drehen des Schwenkträgers um die Rotationsachse wird hierbei jeweils ein Werkstücktisch von einem Arbeitsbereich in einen Beladebereich überführt und gleichzeitig der im Beladebereich befindliche Werkstücktisch in den Arbeitsbereich. Hierdurch können die Stillstandzeiten reduziert werden.

Das Verwenden eines Schwenkträgers erlaubt zwar das hauptzeitparallele Be- und Entladen der Werkstücktische, benötigt aber aufgrund des Schwenkkreises des Schwenkträgers einen erhöhten Abstand zur Arbeitsspindel zur Rotationsachse des Schwenkträgers, um ein kollisionsfreies Schwenken des Schwenkträgers zu ermöglichen.

Eine Aufgabe eines Ausführungsbeispiels der Erfindung ist, eine Werkzeugmaschine vorzuschlagen, die hauptzeitparallel be- und entladbar ist und bei der ein Abstand zwischen Rotationsachse und Arbeitsspindel reduziert ist.

Diese Aufgabe wird gelöst durch eine Werkzeugmaschine mit einem Maschinengestell, mit mindestens einer Arbeitsspindel, die um eine Spindelachse drehbar gelagert ist, mit mindestens einem der mindestens einen Arbeitsspindel zugeordneten Werkstücktisch, der im Maschinengestell um eine Rotationsachse dreh- oder schwenkbar gelagert ist, der eine geschlossene, flächenhafte Trennwand umfasst, die sich über die gesamte Breite des Werkstücktischs quer zur Rotationsachse und über die gesamte Länge des Werkstücktischs parallel zur Rotationsachse erstreckt und durch die die Rotationsachse verläuft, und der mindestens eine erste Werkstückaufnahme und mindestens eine zweite Werkstückaufnahme umfasst, die bezüglich der Trennwand auf einander gegenüberliegenden Seiten der Trennwand drehfest am Werkstücktisch angeordnet sind, wobei der Werkstücktisch zumindest in einem hauptzeitparallelen Be- und Entlademodus der Werkzeugmaschine in eine Trennstellung überführbar ist, in der die Trennwand quer zur zugeordneten Spindelachse verlaufend angeordnet ist und einen Arbeitsbereich, in dem in der Trennstellung die erste oder die zweite Werkstückaufnahme angeordnet und der zugeordneten Arbeitsspindel zugänglich ist, von einem Beladebereich räumlich trennt, in dem in der Trennstellung die zweite, bzw. die erste Werkstückaufnahme angeordnet ist.

Dadurch, dass der Werkstücktisch eine flächenhafte Trennwand umfasst, die sich über die gesamte Breite des Werkstücktischs quer zur Rotationsachse und über die gesamte Länge des Werkstücktischs parallel zur Rotationsachse erstreckt, kann in der Trennstellung ein räumliches Abtrennen zwischen Arbeitsbereich und Beladebereich gewährleistet werden. Hierdurch ist ein hauptzeitparalleles Be- und Entladen der im Beladebereich angeordneten Werkstückaufnahme ermöglicht. Hauptzeitparalleles Be- und Entladen bedeutet, dass die Werkstückaufnahme Be-, bzw. Entladen werden kann, während die im Arbeitsbereich angeordnete Werkstückaufnahme gleichzeitig durch die Arbeitsspindel bearbeitet wird. Hierdurch kann ein Stillstand der Maschine reduziert werden und die Bearbeitungszeiten verbessert werden.

Der Werkstücktisch ist bezüglich der Rotationsachse in einer beliebigen Winkellage positionierbar. Hierdurch stellt die Rotationsachse eine vollwertige Achse dar.

Grundsätzlich ist es denkbar, dass an dem Werkstücktisch lediglich eine einzige erste Werkstückaufnahme und leidglich eine einzige zweite Werkstückaufnahme vorgesehen ist. Darüber hinaus sind Ausführungsformen denkbar, bei denen zwei erste Werkstückaufnahmen und zwei zweite Werkstückaufnahmen oder mindestens drei erste Werkstückaufnahmen und mindestens drei zweite Werkstückaufnahmen an dem Werkstücktisch angeordnet sind.

Die Trennwand kann als Spannbrücke ausgebildet sein. Solchenfalls ist die Trennwand kraft- und lastaufnehmend ausgebildet.

Die mindestens eine erste Werkstückaufnahme und die mindestens eine zweite Werkstückaufnahme sind jeweils zum Aufnehmen und Festlegen mindestens eines Werkstücks ausgebildet.

Neben dem Betrieb der Werkzeugmaschine in einen hauptzeitparallelem Be- und Entlademodus, ist die Werkzeugmaschine in weiteren Betriebsmodi betreibbar.

Bei einer Weiterbildung der Werkzeugmaschine erweist es sich als vorteilhaft, wenn der Werkstücktisch in einem Arbeitsmodus von einem ersten Bearbeitungsschwenkbereich, innerhalb dessen mindestens eine der mindestens einen ersten Werkstückaufnahme im Arbeitsbereich durch Schwenken oder Drehen des Werkstücktischs um die Rotationsachse in mindestens einer Arbeitsposition relativ zum Maschinengestell positionierbar und durch drehfestes Festlegen des Werkstücktisches ortsfest festlegbar ist, in einen zweiten Bearbeitungsschwenkbereich überführbar ist, innerhalb dessen mindestens eine der mindestens einen zweiten Werkstückaufnahme im Arbeitsbereich durch Schwenken oder Drehen des Werkstücktischs um die Rotationsachse in mindestens einer Arbeitsposition relativ zum Maschinengestell positionierbar und durch drehfestes Festlegen des Werkstücktisches ortsfest festlegbar ist.

Dadurch, dass der Werkstücktisch in einem Arbeitsmodus von einem ersten Bearbeitungsschwenkbereich die erste Werkstückaufnahme am Arbeitsbereich zum Schwenken oder Drehen des Werkstücktisches um die Rotationsachse mindestens eine Arbeitsposition relativ zum Maschinengestell positionierbar und durch drehfestes Festlegen des Werkstücktischs ortsfest festlegbar ist, kann die erste Werkstückaufnahme unterschiedlich relativ zur Arbeitsspindel positioniert werden, wodurch ein an der ersten Werkstückaufnahme angeordnetes Werkstück von verschiedenen Seiten aus bearbeitbar ist.

Gleiches gilt entsprechend im zweiten Bearbeitungsschwenkbereich für die zweite Werkstückaufnahme.

Bei einer Ausführungsform der Werkzeugmaschine ist vorgesehen, dass die erste Werkstückaufnahme und die zweite Werkstückaufnahme symmetrisch, insbesondere punktsymmetrisch, bezüglich der Rotationsachse zueinander angeordnet und ausgerichtet an dem Werkstücktisch drehfest festgelegt sind.

Dadurch, dass die erste Werkstückaufnahme und die zweite Werkstückaufnahme symmetrisch, insbesondere punktsymmetrisch, bezüglich der Rotationsachse zueinander angeordnet und ausgerichtet am Werkstücktisch drehfest festgelegt sind, kann bei einem Drehen oder Verschwenken des Werkstücktisches um 180° mindestens ein Werkstück an der jeweiligen Werkstückaufnahme durch die Arbeitsspindel bearbeitet werden, ohne dass die Arbeitsspindel in ihrer Position über einen langen Verfahrweg bewegt werden muss. Hierdurch können Bearbeitungszeiten weiter optimiert werden.

Insbesondere, wenn die erste Werkstückaufnahme und die zweite Werkstückaufnahme punktsymmetrisch bezüglich der Rotationsachse zueinander angeordnet und ausgerichtet am Werkstücktisch drehfest festgelegt sind, erweist es sich als vorteilhaft, wenn die erste Werkstückaufnahme und die zweite Werkstückaufnahme in einer Ebene parallel zur trennenden Oberfläche der Trennwand betrachtet in Richtung quer zur Rotationsachse überlappungsfrei zueinander versetzt angeordnet sind.

Hierdurch kann eine verschränkte Anordnung der ersten Werkstückaufnahme und der zweiten Werkstückaufnahme beim Bearbeiten durch die Arbeitsspindel erzielt werden, wodurch ein Abstand zwischen Arbeitsspindel und Rotationsachse weiter reduzierbar ist.

Es sind Ausführungsformen der Werkzeugmaschine denkbar, bei denen die Rotationsachse des Werkstücktischs parallel zu einer horizontal verlaufenden X-Achse oder parallel zu einer vertikal verlaufenden Y-Achse verläuft und/oder bei denen die Spindelachse der Arbeitsspindel parallel zu einer horizontal verlaufenden Z-Achse verläuft, die quer zur vertikal verlaufenden Y-Achse und quer zur horizontal verlaufenden X-Achse verläuft.

Wenn die Rotationsachse des Werkstücktischs parallel zu einer horizontal verlaufenden X-Achse verläuft, können auch die erste Werkstückaufnahme und die zweite Werkstückaufnahme ihre längste Erstreckung, sprich ihre Längsrichtung, parallel zur horizontal verlaufenden X-Achse umfassen.

Wenn die Rotationsachse des Werkstücktischs parallel zu einer vertikal verlaufenden Y-Achse verläuft, können der mindestens eine erste Werkstücktisch und der mindestens eine zweite Werkstücktisch ihre längste Erstreckung, sprich ihre Längsrichtung, ebenfalls parallel zur Y-Achse umfassen.

Um ein Bearbeiten von Werkstücken, die an einer Werkstückaufnahme angeordnet sind, zu erleichtern, erweist es sich als vorteilhaft, wenn die Trennwand des Werkstücktischs mindestens eine quer zur Rotationsachse erstreckte, durchgehende Öffnung umfasst, durch die die Trennwand durch die Arbeitsspindel durchgreifbar, und eine im Beladebereich angeordnete Werkstückaufnahme der Arbeitsspindel zugänglich ist, und wenn die Trennwand mindestens ein flächenhaftes Verschlussmittel umfasst, das in oder an der mindestens einen Öffnung angeordnet ist und das von einer Freigabestellung, in der das Verschlussmittel die Öffnung zumindest in Richtung quer zur Rotationsachse in Gänze oder abschnittsweise freigibt, in eine Verschlussstellung überführbar ist, in der das Verschlussmittel die Öffnung zumindest in Richtung quer zur Rotationsachse in Gänze verschließt, wobei das Verschlusselement im hauptzeitparallelen Be- und Entlademodus der Werkzeugmaschine in der Verschlussstellung angeordnet ist

Dadurch, dass die Trennwand des Werkstücktischs mindestens eine durchgehende Öffnung umfasst, kann die Arbeitsspindel vom Arbeitsbereich durch die Öffnung hindurch in den Beladebereich durchgreifen und ein Werkstück von einer Seite bearbeiten, die bei der Anordnung des Werkstücks im Arbeitsbereich auf der der Arbeitsspindel abgewandten Seite angeordnet ist. Hierdurch ist es ermöglicht, ein Werkstück, das in einer Werkstückaufnahme angeordnet ist, verbessert von allen Seiten aus, zu bearbeiten.

Dieses erweist sich insbesondere dann als vorteilhaft, wenn die erste Werkstückaufnahme und die zweite Werkstückaufnahme in einer Ebene parallel zur trennenden Oberfläche der Trennwand betrachtet, in Richtung quer zur Rotationsachse überlappungsfrei zueinander versetzt angeordnet sind. Hierdurch ist gewährleistet, dass die im Arbeitsbereich befindliche Werkstückaufnahme kollisionsfrei bezüglich der Arbeitsspindel angeordnet ist, wenn diese durch die Öffnung in der Trennwand auf die Werkstückaufnahme im Beladebereich zugreift.

Dadurch, dass die Trennwand gleichzeitig ein flächenhaftes Verschlussmittel umfasst, das in oder an der mindestens einen Öffnung angeordnet ist und das in der Verschlussstellung die Öffnung zumindest in Richtung quer zur Rotationsachse in Gänze verschließt, ist gewährleistet, dass im Be- und Entlademodus der Werkzeugmaschine der Beladebereich durch die Trennwand in Gänze von der Arbeitsspindel abgeschirmt ist.

Bei einer Weiterbildung letztgenannter Ausführungsform erweist es sich als vorteilhaft, wenn die mindestens eine Öffnung mindestens eine Führung, wie Nut oder Vorsprung, umfasst, durch die das Überführen des Verschlussmittels von der Freigabestellung in die Verschlussstellung und zurück führbar und gegen ein Bewegen quer zur Überführungsrichtung festgelegt ist und/oder wenn das Verschlussmittel schiebetürartig ausgebildet ist und mindestens ein flächenhaftes, insbesondere plattenartiges, Türelement umfasst oder wenn das Verschlussmittel rollladenartig ausgebildet ist und eine Mehrzahl von lamellenartigen Verschlusselementen umfasst.

Durch das Vorsehen einer Führung, wie Nut oder Vorsprung, kann das Verschlussmittel beim Überführen von der Freigabestellung in die Verschlussstellung und zurück, geführt bewegt werden. Darüber hinaus ist solchenfalls das Verschlussmittel in Richtung quer zur Überführungsrichtung durch die Führung gehalten.

Wenn das Verschlussmittel mindestens ein flächenhaftes, insbesondere plattenartiges, Türelement, umfasst, kann das Verschlussmittel einfach bauen.

Wenn das Verschlussmittel rolladenartig ausgebildet ist und eine Mehrzahl von lamellenartigen Verschlusselementen umfasst, kann das Verschlussmittel in der Freigabestellung kompakt bevorratet werden.

Solchenfalls kann das Verschlussmittel auf einem Trommelelement, das innerhalb der Trennwand angeordnet ist, aufgewickelt, insbesondere aufgerollt werden. Hierbei ist es denkbar, dass das Trommelelement einen Antrieb umfasst, mit dem das Trommelelement um eine Drehachse drehbar ist und hierbei das Verschlussmittel aufrollt, bzw. aufwickelt. Das Verschlussmittel kann in die Verschlussstellung vorgespannt sein. Solchenfalls muss das Verschlussmittel entgegen der Vorspannung durch das Trommelelements aktiv in die Freigabestellung überführt werden. Diese Ausführungsform hat den Vorteil, dass bei einer Fehlfunktion des Trommelelements oder des Antriebs für das Trommelelement, automatisch das Verschlussmittel in die Sperrstellung überführt wird, wodurch stets eine hohe Arbeitssicherheit für Bedienpersonal der Werkzeugmaschine gewährleistet ist.

Grundsätzlich ist es denkbar, dass an der Trennwand eine einzige Öffnung vorgesehen ist. Darüber hinaus erweist es sich als vorteilhaft, wenn die Trennwand eine Mehrzahl von quer zur Rotationsachse erstreckte, durchgehenden Öffnung umfasst, die jeweils durch Stegabschnitte der Trennwand zueinander beabstandet sind, wobei jeder Öffnung ein eigenes Verschlussmittel zugeordnet ist oder wobei mindestens zwei Öffnungen, insbesondere allen Öffnungen der Trennwand, ein gemeinsames Verschlussmittel zugeordnet ist.

Durch das Vorsehen einer Mehrzahl von Öffnungen, kann gewährleistet werden, dass durch die Trennwand eine Funktion als Spannbrücke übernommen werden kann, wodurch durch die Trennwand Lasten und Kräfte aufnehmbar sind.

Wenn der Mehrzahl von Öffnungen ein gemeinsames Verschlussmittel zugeordnet ist, kann die Werkzeugmaschine bauteilreduziert ausgebildet werden. Wenn jeder Öffnung ein eigenes Verschlussmittel zugeordnet ist, können die Öffnungen bedarfsabhängig zum Durchgreifen durch die Arbeitsspindel freigegeben werden.

Um zu gewährleisten, dass die Trennwand als Spannbrücke dienen kann, erweist es sich als vorteilhaft, wenn die Trennwand des Werkstücktische mindestens einen parallel zur Rotationsachse erstreckten lastaufnehmenden, tragenden Zentral-Stegabschnitt umfasst, durch den die Rotationsachse verläuft, und/oder mindestens zwei parallel zur Rotationsachse erstreckte lastaufnehmende, tragende Rand-Stegabschnitte, die einen äußeren Rand der Trennwand bilden, insbesondere wobei jeweils zwischen Zentral-Stegabschnitt und Rand-Stegabschnitt mindestens zwei, insbesondere mindestens vier, Öffnungen angeordnet sind, denen jeweils ein eigenes oder ein gemeinsames Verschlussmittel zugeordnet ist.

Durch das Vorsehen des Zentralstegabschnitts und/oder mindestens zwei parallel zur Rotationsachse erstreckte Rand-Stegabschnitte, kann gewährleistet werden, dass in Richtung parallel zur Rotationsachse Lasten aufgenommen und weiter transportiert werden können.

Um das Bearbeiten von an dem Werkstücktisch angeordneten Werkstücken zu beschleunigen, umfasst eine Ausführungsform der Werkzeugmaschine mindestens zwei Arbeitsspindeln, die dem gleichen Werkstücktisch zugeordnet sind, wobei die Spindelachsen der mindestens zwei dem gleichen Werkstücktisch zugeordneten Arbeitsspindeln parallel zueinander verlaufen und horizontal nebeneinander angeordnet sind, wenn die Rotationsachse des Werkstücktischs parallel zu einer horizontal verlaufenden X-Achse verläuft, oder vertikal übereinander angeordnet sind, wenn die Rotationsachse des Werkstücktischs parallel zu einer vertikal verlaufenden Y-Achse verläuft.

Durch das Vorsehen von mindestens zwei Arbeitsspindeln, die dem gleichen Werkstücktisch zugeordnet sind, kann gewährleistet werden, dass eine im Arbeitsbereich angeordnete Werkstückaufnahme durch mindestens zwei Arbeitsspindeln bearbeitet wird. Hierdurch können die Bearbeitungszeiten reduziert werden.

Um die Anzahl der durch die Werkzeugmaschine gleichzeitig bearbeitbaren Werkstücke weiter zu erhöhen, umfasst eine weitere Ausführungsform der Werkzeugmaschine mindestens zwei Arbeitsspindeln und mindestens zwei Werkstücktische, wobei mindestens eine erste Arbeitsspindel einem ersten Werkstücktisch zugeordnet ist, der im Maschinengestell um eine erste Rotationsachse dreh- oder schwenkbar gelagert ist, und wobei mindestens eine zweite Arbeitsspindel einem zweiten Werkstücktisch zugeordnet ist, der im Maschinengestell oder im Schwenkträger um eine zweite Rotationsachse dreh- oder schwenkbar gelagerten zugeordnet ist, die parallel zur ersten Rotationsachse verläuft und zur ersten Rotationsachse beabstandet ist.

Hierdurch umfasst die Werkzeugmaschine mindestens zwei Werkstücktische, die parallel zueinander verlaufen.

Die Werkstücktische können derart ausgebildet sein, dass diese unmittelbar aneinander angrenzen und bei einem horizontalen Verlauf der Rotationsachse übereinander miteinander fluchten und bei einem vertikalen Verlauf der Rotationsachse nebeneinander angeordnet sind.

Darüber hinaus erweist es sich als vorteilhaft, dass im Be- und Entlademodus der Werkzeugmaschine alle Werkstücktische in die Trennstellung überführt werden.

Darüber hinaus kann bei einer weiteren Ausführungsform der Werkzeugmaschine in Weiterbildung der letztgenannten Ausführungsform mindestens eine weitere Arbeitsspindel und mindestens ein weiterer Werkstücktisch vorgesehen sein, wobei die mindestens eine weitere Arbeitsspindel dem mindestens einen weiteren Werkstücktisch zugeordnet ist, der im Maschinengestell um eine weitere Rotationsachse dreh- oder schwenkbar gelagert ist, die parallel zur ersten Rotationsachse verläuft und die zur ersten und zweiten Rotationsachse beabstandet ist.

Hierdurch kann die Werkzeugmaschine mindestens drei Werkstücktische umfassen, die bei einem horizontalen Verlauf der Rotationsachsen übereinander und miteinander fluchtend angeordnet sind und bei einem vertikalen Verlauf in Reihe nebeneinander angeordnet sind.

Bei den zuvor genannten Ausführungsbeispielen kann jeweils nur eine erste Arbeitsspindel, eine zweite Arbeitsspindel und eine weitere Arbeitsspindel vorgesehen sein. Darüber hinaus sind Ausführungsformen denkbar, bei denen jeweils mehrere, insbesondere zwei, drei oder vier, erste Arbeitsspindeln, zweite Arbeitsspindeln und weitere Arbeitsspindeln vorgesehen sind, die jeweils dem ersten Werkstücktisch, dem zweiten Werkstücktisch, bzw. dem weiteren Werkstücktisch, zugeordnet sind.

Das Wort "beziehungsweise" wird im klassischen Wortsinn verstanden in der Bedeutung "und im anderen Fall".

Beim Vorsehen mehrerer Werkstücktische erweist es sich als vorteilhaft, wenn der erste Werkstücktisch und der zweite Werkstücktisch oder dass der erste Werkstücktisch, der zweite Werkstücktisch und der mindestens eine weitere Werkstücktisch in einem unabhängigen Betriebsmodus, insbesondere bezüglich ihrer Kinematik entkoppelt, separat und unabhängig voneinander in die Trennstellung, in den ersten Bearbeitungsschwenkbereich und in den zweiten Bearbeitungsschwenkbereich überführbar sind und/oder in einem abhängigen Betriebsmodus, insbesondere bezüglich ihrer Kinematik gekoppelt, gemeinsam und gleichzeitig in die Trennstellung, in den ersten Bearbeitungsschwenkbereich und in den zweiten Bearbeitungsschwenkbereich überführbar sind.

Wenn die einzelnen Werkstücktische in einem unabhängigen Betriebsmodus voneinander entkoppelt, separat und unabhängig in die Trennstellung, in den ersten Bearbeitungsschwenkbereich und in den zweiten Bearbeitungsschwenkbereich überführbar sind, ist die Werkzeugmaschine flexibler einsetzbar. Wenn alle Werkstücktische gemeinsam und gleichzeitig in die Trennstellung, in den ersten Bearbeitungsschwenkbereich und in den zweiten Bearbeitungsschwenkbereich überführbar sind, können gleiche Werkstücke vereinfacht bearbeitet werden.

Ferner erweist es sich als vorteilhaft, wenn die mindestens eine erste Arbeitsspindel und die mindestens eine zweite Arbeitsspindel oder dass die mindestens eine erste Arbeitsspindel, die mindestens eine zweite Arbeitsspindel und die mindestens eine weitere Arbeitsspindel bezüglich ihrer Kinematik entkoppelt, separat und unabhängig voneinander betreibbar und/oder verfahrbar sind und/oder bezüglich ihrer Kinematik gekoppelt, gemeinsam und gleichzeitig betreibbar und/oder verfahrbar sind.

Hierdurch können der unabhängige Betriebsmodus und der abhängige Betriebsmodus durch voneinander entkoppelte oder miteinander gekoppelte Arbeitsspindeln vereinfacht umgesetzt werden.

Um ein kollisionsfreies Bearbeiten zu gewährleisten, ist bei einer Ausführungsform der Werkzeugmaschine vorgesehen, dass die mindestens eine erste Arbeitsspindel und die mindestens eine zweite Arbeitsspindel oder dass die mindestens eine erste Arbeitsspindel, die mindestens eine zweite Arbeitsspindel und die mindestens eine weitere Arbeitsspindel vertikal übereinander angeordnet sind, wenn die Rotationsachsen der Werkstücktische parallel zu einer horizontal verlaufenden X-Achse verlaufen, oder horizontal nebeneinander angeordnet sind, wenn die Rotationsachsen der Werkstücktische parallel zu einer vertikal verlaufenden Y-Achse verlaufen.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Werkzeugmaschine.

In der Zeichnung zeigt:
- Figur 1: Eine schematische Seitenansicht auf eine erfindungsgemäße Werkzeugmaschine mit zwei Werkstücktischen;
- Figur 2: Eine perspektivische Seitenansicht auf die Werkzeugmaschine gemäß Figur 1, bei der die Werkstückaufnahmen des zweiten Werkstücktischs ausgeblendet sind;
- Figur 3: Eine perspektivische Seitenansicht der Darstellung gemäß Figur 2 mit einem ersten Werkstücktisch in einer bezüglich der Trennstellung verdrehten Anordnung.

Die Figuren zeigen eine insgesamt mit dem Bezugszeichen 2 versehene Werkzeugmaschine. Diese umfasst ein Maschinengestell (in den Figuren nicht dargestellt).

Die Werkzeugmaschine 2 umfasst bei dem in den Figuren gezeigten Ausführungsbeispiel mehrere Arbeitsspindeln 4, die jeweils um eine Spindelachse 6 drehbar gelagert sind. Bei dem in den Figuren gezeigten Ausführungsbeispiel sind die Arbeitsspindeln 4 um eine Spindelachse 6 drehbar gelagert, die parallel zu einer horizontal verlaufenden Z-Achse verlaufen. Die beiden Arbeitsspindeln 4 sind bezüglich einer vertikal verlaufenden Y-Achse übereinander und miteinander fluchtend, angeordnet.

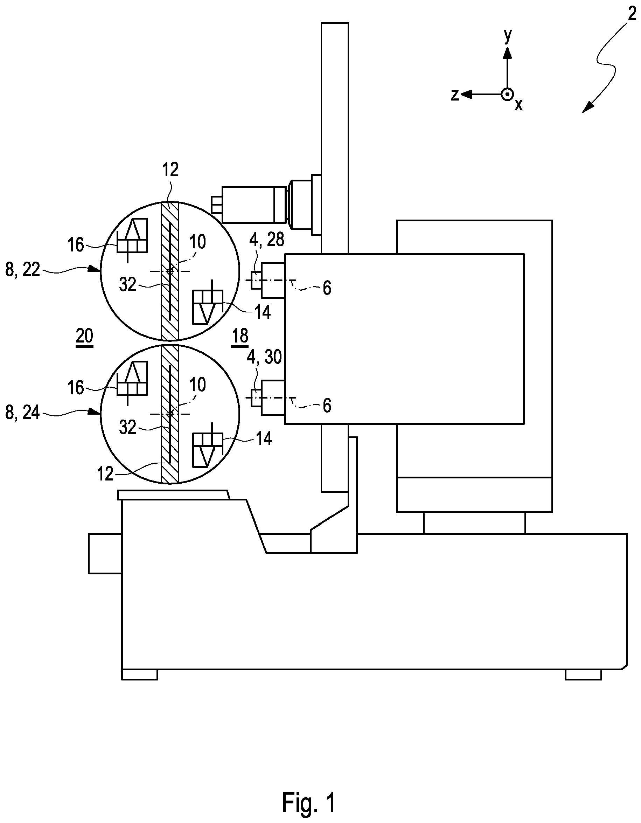

Darüber hinaus umfasst das in den Figuren 1 bis 3 dargestellte Ausführungsbeispiel der Werkzeugmaschine 2 zwei Werkstücktische 8, die im Maschinengestell jeweils um eine Rotationsachse 10 dreh- und/oder schwenkbar gelagert sind. Die Rotationsachse 10 verläuft parallel zu einer horizontal verlaufenden X-Achse.

Jeder Werkstücktisch 8 umfasst eine geschlossene, flächenhafte Trennwand 12, die sich über die gesamte Breite des Werkstücktischs 8 quer zur Rotationsachse 10 und über die gesamte Länge des Werkstücktischs 8 parallel zur Rotationsachse 10 erstreckt. Die Rotationsachse 10 verläuft innerhalb der Trennwand 12.

Darüber hinaus umfasst jeder Werkstücktisch 8 eine erste Werkstückaufnahme 14 und eine zweite Werkstückaufnahme 16. Die erste Werkstückaufnahme 14 und die zweite Werkstückaufnahme 16 sind bezüglich der Trennwand 12 aufeinander gegenüberliegenden Seiten der Trennwand 12 drehfest am Werkstücktisch 8 angeordnet.

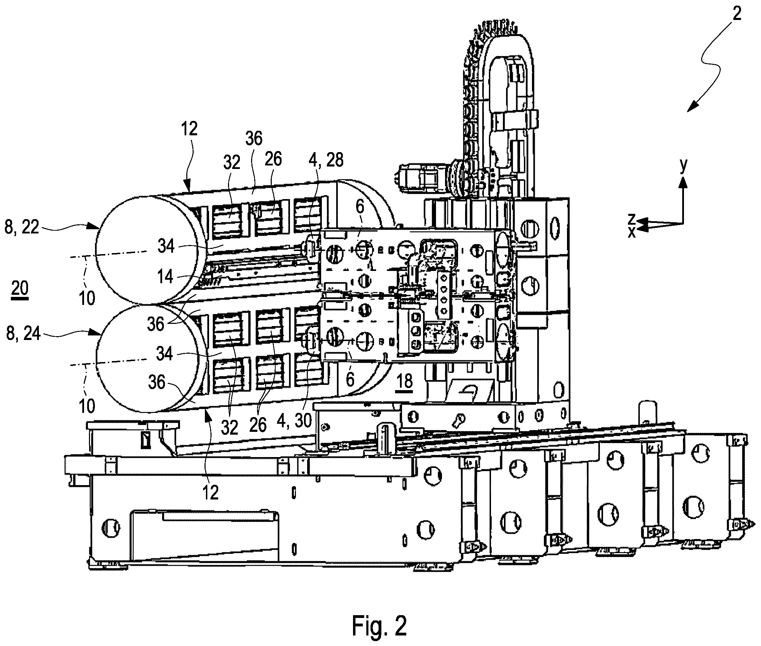

Die Figuren 1 und 2 zeigen die Werkstückmaschine 2 in einem hauptzeitparallelen Be- und Entlademodus. In diesem sind die Werkstücktische 8 in eine Trennstellung überführt, in der die jeweiligen Trennwände 12 quer zur zugeordneten Spindelachse 6 verlaufend angeordnet sind und einen Arbeitsbereich 18, in dem in der Trennstellung bei dem in den Figuren gezeigten Ausführungsbeispiel die erste Werkstückaufnahme 14 abgeordnet ist. Die die zweite Werkstückaufnahme 16 ist dabei in einem Beladebereich 20 angeordnet. Die Trennwand 12 trennt hierbei den Arbeitsbereich 18 vom Beladebereich 20 in der Trennstellung räumlich voneinander.

Bei dem in den Figuren gezeigten Ausführungsbeispiel ist ein erster Werkstücktisch 22 oberhalb eines zweiten Werkstücktischs 24 angeordnet. Die Arbeitsbereiche 18 der beiden Werkstücktische 22, 24 sind hierbei nicht voneinander getrennt und bilden einen gemeinsamen Arbeitsbereich 18. Gleiches gilt für den Beladebereich 20.

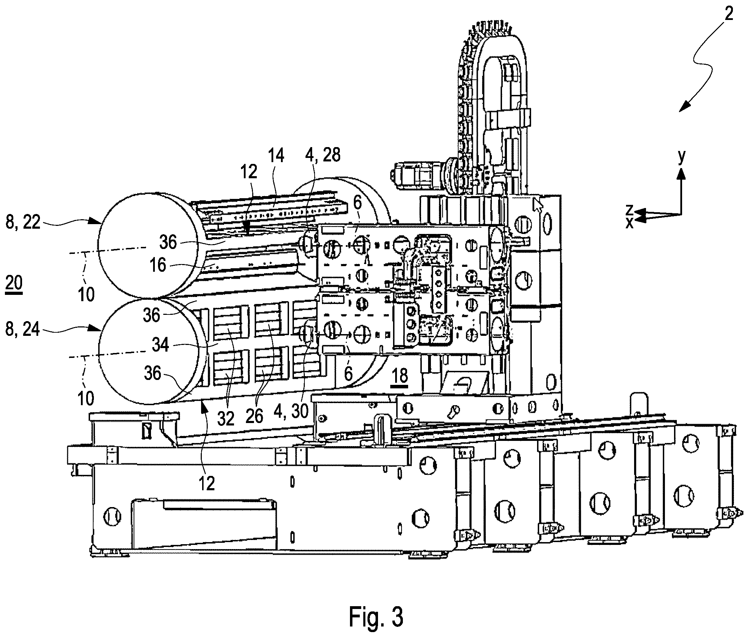

Wie in Figur 3 ersichtlich, sind die einzelnen Werkstücktische 8 in einem Arbeitsmodus von einem ersten Bearbeitungsschwenkbereich, innerhalb dessen mindestens einer der mindestens einen Werkstückaufnahmen 14, 16 im Arbeitsbereich 18 durch Schwenken oder Drehen des Werkstücktisches 8 um die Rotationsachse 10 in mindestens einer Arbeitsposition relativ zum Maschinengestell positionierbar und durch drehfestes Festlegen des Werkstücktisches 8 ortsfest festlegbar ist.

In einem zweiten Bearbeitungsschwenkbereich, innerhalb dessen mindestens einer der mindestens einer der mindestens einen zweiten Werkstückaufnahmen 16 im Arbeitsbereich 18 durch Schwenken oder Drehen des Werkstücktisches 8 um die Rotationsachse 10 in mindestens einer Arbeitsposition relativ zum Maschinengestell positionierbar und durch drehfestes Festlegen des Werkstücktisches 8 ortsfest festlegbar.

Die erste Werkstückaufnahme 14 und die zweite Werkstückaufnahme 16 sind bezüglich der Rotationsachse 10 punktsymmetrisch an dem Werkstücktisch 8 drehfest festgelegt. Hierbei sind die erste Werkstückaufnahme 14 und die zweite Werkstückaufnahme 16 in einer Ebene parallel zur trennenden Oberfläche der Trennwand 12 betrachtet, in Richtung quer zur Rotationsachse 10 überlappungsfrei zueinander versetzt, angeordnet.

Dieses ermöglicht der jeweiligen Arbeitsspindel 4, kollisionsfrei eine in der Trennwand 12 angeordnete, quer zur Rotationsachse 10 erstreckte, durchgehende Öffnung 26 zu durchgreifen. Hierbei kann eine erste Arbeitsspindel 28 die Öffnungen 26 im ersten Werkstücktisch 22 durchgreifen und eine zweite Arbeitsspindel 30 die Öffnungen 26 im zweiten Werkstücktisch 24. Bei dem in den Figuren gezeigten Ausführungsbeispiel sind in der Öffnung 26 Verschlussmittel 32 angeordnet, die bei dem in den Figuren gezeigten Ausführungsbeispiel in einer Verschlussstellung angeordnet sind. In einer Verschlussstellung werden die Öffnungen 26 durch das Verschlussmittel 32 in Richtung quer zur Rotationsachse 10 in Gänze verschlossen. Das Verschlussmittel 32 ist auch in einer Freigabestellung überführbar, in der die Öffnung 26 in Gänze oder zumindest abschnittsweise freigegeben ist (in den Figuren nicht dargestellt).

Bei dem in den Figuren gezeigten Ausführungsbeispielen sind in jedem Werkzeugtisch 8 jeweils acht Öffnungen 26 angeordnet. Hierbei sind vier der acht Öffnungen 26 jeweils zwischen einem Zentral-Stegabschnitt 34 und einem Rand-Stegabschnitt 36 angeordnet.

Figur 1 zeigt eine schematische Seitenansicht auf die Werkzeugmaschine 2. Aus Figur 1 ist ersichtlich, dass der erste Werkstücktisch 22 und der zweite Werkstücktisch 24 bezüglich einer vertikal verlaufenden Y-Achse übereinander und miteinander fluchtend angeordnet sind. Ferner liegen erster Werkstücktisch 22 und zweiter Werkstücktisch 24 zumindest nahezu aneinander an.

Figur 2 zeigt die Werkzeugmaschine 2 gemäß Figur 1 in einer isometrischen Seitenansicht. Hierbei wurde die erste Werkstückaufnahme 14 des zweiten Werkstücktischs 24 ausgeblendet, um einen ungehinderten Blick auf die acht Öffnungen 26 und das darin angeordnete Verschlussmittel 32 ersichtlich zu machen. Bei der Darstellung gemäß der Figuren 1 und 2 befinden sich beide Werkstücktische 8 in der Trennstellung, bei der die Trennwand 12 den Arbeitsbereich 18 vom Beladebereich 20 räumlich trennt.

Figur 3 zeigt die Werkzeugmaschine 2 der Figuren 1 und 2, bei der der erste Werkstücktisch 22 bezüglich der Trennstellung verdreht ist.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen im Rahmen des Schutzumfangs der nachfolgenden Ansprüche wesentlich sein.

### Bezugszeichenliste

- 2: Werkzeugmaschine
- 4: Arbeitsspindel
- 6: Spindelachse
- 8: Werkstücktisch
- 10: Rotationsachse
- 12: Trennwand
- 14: erste Werkstückaufnahme
- 16: zweite Werkstückaufnahme
- 18: Arbeitsbereich
- 20: Beladebereich
- 22: erster Werkstücktisch
- 24: zweiter Werkstücktisch
- 26: Öffnung
- 28: erste Arbeitsspindel
- 30: zweite Arbeitsspindel
- 32: Verschlussmittel
- 34: Zentral-Stegabschnitt
- 36: Rand-Stegabschnitt

## Patentansprüche

1. Werkzeugmaschine (2) mit einem Maschinengestell, mit mindestens einer Arbeitsspindel (4), die um eine Spindelachse (6) drehbar gelagert ist, mit mindestens einem der mindestens einen Arbeitsspindel (4) zugeordneten Werkstücktisch (8), der im Maschinengestell um eine Rotationsachse (10) dreh- oder schwenkbar gelagert ist, der eine geschlossene, flächenhafte Trennwand (12) umfasst, die sich über die gesamte Breite des Werkstücktischs (8) quer zur Rotationsachse (10) und über die gesamte Länge des Werkstücktischs (8) parallel zur Rotationsachse (10) erstreckt und durch die die Rotationsachse (10) verläuft, und der mindestens eine erste Werkstückaufnahme (14) und mindestens eine zweite Werkstückaufnahme (16) umfasst, die bezüglich der Trennwand (12) auf einander gegenüberliegenden Seiten der Trennwand (12) drehfest am Werkstücktisch (8) angeordnet sind, wobei der Werkstücktisch (8) zumindest in einem hauptzeitparallelen Be- und Entlademodus der Werkzeugmaschine (2) in eine Trennstellung überführbar ist, in der die Trennwand (12) quer zur zugeordneten Spindelachse (6) verlaufend angeordnet ist und einen Arbeitsbereich (18), in dem in der Trennstellung die erste oder die zweite Werkstückaufnahme (14, 16) angeordnet und der zugeordneten Arbeitsspindel (4) zugänglich ist, von einem Beladebereich (20) räumlich trennt, in dem in der Trennstellung die zweite, bzw. die erste Werkstückaufnahme (16, 14) angeordnet ist.

2. Werkzeugmaschine (2) nach Anspruch 1, **dadurch gekennzeichnet, dass** der Werkstücktisch (8) in einem Arbeitsmodus von einem ersten Bearbeitungsschwenkbereich, innerhalb dessen mindestens eine der mindestens einen ersten Werkstückaufnahme (14) im Arbeitsbereich (18) durch Schwenken oder Drehen des Werkstücktischs (8) um die Rotationsachse (10) in mindestens einer Arbeitsposition relativ zum Maschinengestell positionierbar und durch drehfestes Festlegen des Werkstücktisches (8) ortsfest festlegbar ist, in einen zweiten Bearbeitungsschwenkbereich überführbar ist, innerhalb dessen mindestens eine der mindestens einen zweiten Werkstückaufnahme (16) im Arbeitsbereich (18) durch Schwenken oder Drehen des Werkstücktischs (8) um die Rotationsachse (10) in mindestens einer Arbeitsposition relativ zum Maschinengestell positionierbar und durch drehfestes Festlegen des Werkstücktisches (8) ortsfest festlegbar ist.

3. Werkzeugmaschine (2) nach Anspruch 1 oder 2, **dadurch gekennzeichnet, dass** die erste Werkstückaufnahme (14) und die zweite Werkstückaufnahme (16) symmetrisch, insbesondere punktsymmetrisch, bezüglich der Rotationsachse (10) zueinander angeordnet und ausgerichtet an dem Werkstücktisch (8) drehfest festgelegt sind.

4. Werkzeugmaschine (2) nach einem der vorhergehenden Ansprüche, **dadurch gekennzeichnet, dass** die erste Werkstückaufnahme (14) und die zweite Werkstückaufnahme (16) in einer Ebene parallel zur trennenden Oberfläche der Trennwand (12) betrachtet, in Richtung quer zur Rotationsachse (10) überlappungsfrei zueinander versetzt angeordnet sind.

5. Werkzeugmaschine (2) nach einem der vorhergehenden Ansprüche, **dadurch gekennzeichnet, dass** die Rotationsachse (10) des Werkstücktischs (8) parallel zu einer horizontal verlaufenden X-Achse oder parallel zu einer vertikal verlaufenden Y-Achse verläuft und/oder dass die Spindelachse (6) der Arbeitsspindel (4) parallel zu einer horizontal verlaufenden Z-Achse verläuft, die quer zur vertikal verlaufenden Y-Achse und quer zur horizontal verlaufenden X-Achse verläuft.

6. Werkzeugmaschine (2) nach einem der vorhergehenden Ansprüche, **dadurch gekennzeichnet, dass** die Trennwand (12) des Werkstücktischs (8) mindestens eine quer zur Rotationsachse (10) erstreckte, durchgehende Öffnung (26) umfasst, durch die die Trennwand (12) durch die Arbeitsspindel (4) durchgreifbar, und eine im Beladebereich (20) angeordnete Werkstückaufnahme (14, 16) der Arbeitsspindel (4) zugänglich ist, und dass die Trennwand (12) mindestens ein flächenhaftes Verschlussmittel (32) umfasst, das in oder an der mindestens einen Öffnung (26) angeordnet ist und das von einer Freigabestellung, in der das Verschlussmittel (32) die Öffnung (26) zumindest in Richtung quer zur Rotationsachse (10) in Gänze oder abschnittsweise freigibt, in eine Verschlussstellung überführbar ist, in der das Verschlussmittel (32) die Öffnung (26) zumindest in Richtung quer zur Rotationsachse (10) in Gänze verschließt, wobei das Verschlusselement im hauptzeitparallelen Be- und Entlademodus der Werkzeugmaschine (2) in der Verschlussstellung angeordnet ist.

7. Werkzeugmaschine (2) nach Anspruch 6, **dadurch gekennzeichnet, dass** die mindestens eine Öffnung (26) mindestens eine Führung, wie Nut oder Vorsprung, umfasst, durch die das Überführen des Verschlussmittels (32) von der Freigabestellung in die Verschlussstellung und zurück führbar und gegen ein Bewegen quer zur Überführungsrichtung festgelegt ist und/oder dass Verschlussmittel (32) schiebetürartig ausgebildet ist und mindestens ein flächenhaftes, insbesondere plattenartiges, Türelement umfasst oder dass das Verschlussmittel (32) rollladenartig ausgebildet ist und eine Mehrzahl von lamellenartigen Verschlusselementen umfasst.

8. Werkzeugmaschine (2) nach einem der Ansprüche 6 oder 7, **dadurch gekennzeichnet, dass** die Trennwand (12) eine Mehrzahl von quer zur Rotationsachse (10) erstreckten, durchgehenden Öffnung (26) umfasst, die jeweils durch Stegabschnitte (34) der Trennwand (12) zueinander beabstandet sind, wobei jeder Öffnung (26) ein eigene Verschlussmittel (32) zugeordnet ist oder wobei mindestens zwei Öffnungen (26), insbesondere allen Öffnungen (26) der Trennwand (12), ein gemeinsames Verschlussmittel (32) zugeordnet ist.

9. Werkzeugmaschine (2) nach Anspruch 8, **dadurch gekennzeichnet, dass** die Trennwand (12) des Werkstücktischs (8) mindestens einen parallel zur Rotationsachse (10) erstreckten lastaufnehmenden, tragenden Zentral-Stegabschnitt (34) umfasst, durch den die Rotationsachse (10) verläuft, und/oder mindestens zwei parallel zur Rotationsachse (10) erstreckte lastaufnehmende, tragende Rand-Stegabschnitte (36), die einen äußeren Rand der Trennwand (12) bilden, insbesondere wobei jeweils zwischen Zentral-Stegabschnitt (34) und Rand-Stegabschnitt (36) mindestens zwei, insbesondere mindestens vier, Öffnungen (26) angeordnet sind, denen jeweils ein eigenes oder ein gemeinsames Verschlussmittel (32) zugeordnet ist.

10. Werkzeugmaschine (2) nach einem der vorhergehenden Ansprüche, **gekennzeichnet durch** mindestens zwei Arbeitsspindeln (4), die dem gleichen Werkstücktisch (8) zugeordnet sind, wobei die Spindelachsen (6) der mindestens zwei dem gleichen Werkstücktisch (8) zugeordneten Arbeitsspindeln (4) parallel zueinander verlaufen und horizontal nebeneinander angeordnet sind, wenn die Rotationsachse (10) des Werkstücktischs (8) parallel zu einer horizontal verlaufenden X-Achse verläuft, oder vertikal übereinander angeordnet sind, wenn die Rotationsachse (10) des Werkstücktischs (8) parallel zu einer vertikal verlaufenden Y-Achse verläuft.

11. Werkzeugmaschine (2) nach einem der vorhergehenden Ansprüche, **gekennzeichnet durch** mindestens zwei Arbeitsspindeln (4) und durch mindestens zwei Werkstücktische (8), wobei mindestens eine erste Arbeitsspindel (28) einem ersten Werkstücktisch (22) zugeordnet ist, der im Maschinengestell um eine erste Rotationsachse dreh- oder schwenkbar gelagert ist, und wobei mindestens eine zweite Arbeitsspindel (30) einem zweiten Werkstücktisch (24) zugeordnet ist, der im Maschinengestell oder im Schwenkträger um eine zweite Rotationsachse dreh- oder schwenkbar gelagerten zugeordnet ist, die parallel zur ersten Rotationsachse verläuft und zur ersten Rotationsachse beabstandet ist.

12. Werkzeugmaschine (2) nach Anspruch 11, **gekennzeichnet durch** mindestens eine weitere Arbeitsspindel (4) und durch mindestens einen weiteren Werkstücktisch (8), wobei die mindestens eine weitere Arbeitsspindel (4) dem mindestens einen weiteren Werkstücktisch (8) zugeordnet ist, der im Maschinengestell um eine weitere Rotationsachse (10) dreh- oder schwenkbar gelagert ist, die parallel zur ersten Rotationsachse verläuft und die zur ersten und zweiten Rotationsachse beabstandet ist.

13. Werkzeugmaschine (2) nach Anspruch 11 oder 12, **dadurch gekennzeichnet, dass** der erste Werkstücktisch (22) und der zweite Werkstücktisch (24) oder dass der erste Werkstücktisch (22), der zweite Werkstücktisch (24) und der mindestens eine weitere Werkstücktisch (8) in einem unabhängigen Betriebsmodus, insbesondere bezüglich ihrer Kinematik entkoppelt, separat und unabhängig voneinander in die Trennstellung, in den ersten Bearbeitungsschwenkbereich und in den zweiten Bearbeitungsschwenkbereich überführbar sind und/oder in einem abhängigen Betriebsmodus, insbesondere bezüglich ihrer Kinematik gekoppelt, gemeinsam und gleichzeitig in die Trennstellung, in den ersten Bearbeitungsschwenkbereich und in den zweiten Bearbeitungsschwenkbereich überführbar sind.

14. Werkzeugmaschine (2) nach einem der Ansprüche 11 bis 13, **dadurch gekennzeichnet, dass** die mindestens eine erste Arbeitsspindel (28) und die mindestens eine zweite Arbeitsspindel (30) oder dass die mindestens eine erste Arbeitsspindel (28), die mindestens eine zweite Arbeitsspindel (30) und die mindestens eine weitere Arbeitsspindel (4) bezüglich ihrer Kinematik entkoppelt, separat und unabhängig voneinander betreibbar und/oder verfahrbar sind und/oder bezüglich ihrer Kinematik gekoppelt, gemeinsam und gleichzeitig betreibbar und/oder verfahrbar sind.

15. Werkzeugmaschine (2) nach einem der Ansprüche 11 bis 14, **dadurch gekennzeichnet, dass** die mindestens eine erste Arbeitsspindel (28) und die mindestens eine zweite Arbeitsspindel (30) oder dass die mindestens eine erste Arbeitsspindel (28), die mindestens eine zweite Arbeitsspindel (30) und die mindestens eine weitere Arbeitsspindel (4) vertikal übereinander angeordnet sind, wenn die Rotationsachsen (10) der Werkstücktische (8) parallel zu einer horizontal verlaufenden X-Achse verlaufen, oder horizontal nebeneinander angeordnet sind, wenn die Rotationsachsen (10) der Werkstücktische (8) parallel zu einer vertikal verlaufenden Y-Achse verlaufen.
